Europäisches Patentamt

European Patent Office

Office européen des brevets

(19)

(11) **EP 1 381 936 B1**

(12) **FASCICULE DE BREVET EUROPEEN**

(45) Date de publication et mention
de la délivrance du brevet:
**06.07.2005 Bulletin 2005/27**

(21) Numéro de dépôt: **02727698.9**

(22) Date de dépôt: **25.04.2002**

(51) Int Cl.⁷: **G06F 7/72**

(86) Numéro de dépôt international:
**PCT/FR2002/001434**

(87) Numéro de publication internationale:
**WO 2002/088933 (07.11.2002 Gazette 2002/45)**

(54) **PROCEDE DE CONTRE-MESURE DANS UN COMPOSANT ELECTRONIQUE METTANT EN OEUVRE UN ALGORITHME CRYPTOGRAPHIQUE DU TYPE A CLE PUBLIQUE SUR UNE COURBE ELLIPTIQUE**

GEGENMASSNAHMEN IN EINEM ELEKTRONISCHEN BAUSTEIN ZUR AUSFÜHRUNG EINES KRYPTO-ALGORITHMUS MIT AUF ELLIPTISCHEN KURVEN BASIERENDEM ÖFFENTLICHEN SCHLÜSSEL

COUNTERMEASURE METHOD IN AN ELECTRONIC COMPONENT USING A PUBLIC KEY CRYPTOGRAPHIC ALGORITHM ON AN ELLIPTIC CURVE

(84) Etats contractants désignés:
**DE ES FR GB IT**

(30) Priorité: **27.04.2001 FR 0105759**

(43) Date de publication de la demande:
**21.01.2004 Bulletin 2004/04**

(73) Titulaire: **GEMPLUS**
**13420 Gémenos (FR)**

(72) Inventeur: **JOYE, Marc**
**F-83640 SAINT ZACHARIE (FR)**

(56) Documents cités:
**WO-A-99/30458**      **FR-A- 2 791 496**

**Description**

La présente invention concerne un procédé de contre-mesure dans un composant électronique mettant en oeuvre un algorithme cryptographique du type à clé publique sur courbe elliptique.

Les algorithmes à clé publique sur courbe elliptique permettent des applications cryptographiques de type chiffrement, vérification de signature, authentification....

Ils sont notamment très utilisés dans des applications de type carte à puce, parce qu'ils permettent d'utiliser des clés de faible longueur, autorisant des temps de traitement assez courts, et qu'ils peuvent ne pas nécessiter l'utilisation de crypto-processeurs pour leur implémentation, ce qui diminue le prix de revient des composants électroniques dans lesquels ils sont implémentés.

Pour mémoire, si IK est un corps, l'ensemble des points $(x,y) \in |KX|K$ vérifiant l'équation générale de Weirstrass : $y^2 + a1xy + a3y = x^3 + a2x^2 + a4x + a6$ , avec ai $\in$ IK et du point à l'infini O forme une courbe elliptique. Toute courbe elliptique sur un corps peut s'exprimer sous cette forme.

L'ensemble des points (x,y) et le point à l'infini forment un groupe abélien, dans lequel le point à l'infini est l'élément neutre et dans lequel l'opération de groupe est l'addition de points, notée + et donnée par la règle bien connue de la sécante et de la tangente. Dans ce groupe, la paire (x,y), où l'abscisse x et l'ordonnée y sont des éléments du corps IK, forme les coordonnées affines d'un point P de la courbe elliptique.

On rappelle que dans un corps fini, le nombre d'éléments du corps s'exprime toujours sous la forme $p^n$, où p est un nombre premier. p est la caractéristique du corps.

Deux classes de courbes elliptiques sont plus particulièrement utilisées dans les systèmes cryptographiques : celles définies sur un corps fini de caractéristique p différente de 2 et 3 et celles définies sur un corps de caractéristique égale à 2.

Pour les courbes elliptiques de la première classe, l'équation de Weirtrass se simplifie en :

$$y^2 = x^3 + ax + b$$

Et pour celles de la deuxième classe en se restreignant aux courbes non-supersingulières, cette équation devient :

$$y^2 + xy = x^3 + ax^2 + b.$$

Pour chacune de ces deux classes de courbes, des opérations d'addition et de doublement de points ont été définies. Des formules pour ces opérations sont données dans de nombreuses références connues de l'homme du métier. Ces formules sont détaillées plus loin dans le texte, dans le cas d'une courbe elliptique définie sur un corps de caractéristique différente de 2 ou 3.

Ces opérations sont à la base des algorithmes d'exponentiation sur ces courbes elliptiques : étant donné un point P appartenant à une courbe elliptique et d un nombre prédéterminé (un entier), le résultat de la multiplication scalaire du point P par le multiplieur d est un point Q de la courbe tel que Q=d.P=P+P+...+P d fois.

Les algorithmes cryptographiques à clé publique sur courbe elliptique sont ainsi basés sur la multiplication scalaire d'un point P sélectionné sur la courbe, par un nombre prédéterminé d, la clé secrète. Le résultat de cette multiplication scalaire d.P est un point Q de la courbe elliptique. Dans un exemple d'application au chiffrement selon le procédé de El Gamal, le point Q obtenu est la clé publique qui sert au chiffrement d'un message.

Cependant, les algorithmes cryptographiques à clé publique sur courbe elliptique se sont révélés sensibles aux attaques visant à découvrir notamment la valeur de la clé secrète. On peut citer notamment les attaques à canaux cachés, simples ou différentielles.

On entend par attaque à canal caché simple ou différentielle, une attaque basée sur une grandeur physique mesurable de l'extérieur du dispositif, et dont l'analyse directe (attaque simple) ou l'analyse selon une méthode statistique (attaque différentielle) permet de découvrir des informations contenues et manipulées dans des traitements dans le dispositif. Ces attaques peuvent ainsi permettre de découvrir des informations confidentielles. Ces attaques ont notamment été dévoilées par Paul Kocher *(Advances* in *Cryptology - CRYPTO'99, vol. 1966 of Lecture Notes in Computer Science, pp.388-397. Springer-Verlag, 1999).* Parmi les grandeurs physiques qui peuvent être exploitées à ces fins, on peut citer la consommation en courant, le champ électromagnétique ... Ces attaques sont basées sur le fait que la manipulation d'un bit, c'est à dire son traitement par une instruction particulière, a une empreinte particulière sur la grandeur physique considérée selon sa valeur.

Dans les systèmes cryptographiques basés sur des courbes elliptiques, ces attaques visent la multiplication scalaire.

Le calcul de la multiplication scalaire Q=d.P peut être réalisé par différents algorithmes d'exponentiation. On peut en citer quelques uns, comme l'algorithme de doublement et d'addition *(double and add* dans la littérature anglo-saxonne) basé sur la représentation binaire du multiplieur d, celui d'addition-soustraction basé sur la représentation binaire signée du multiplieur d, l'algorithme avec fenêtre... Tous ces algorithmes utilisent des formules d'opérations de doublement et d'addition définies sur les courbes elliptiques.

Dans tous ces algorithmes, on a du prévoir des procédés de contre-mesure permettant d'empêcher les différentes attaques de prospérer. En d'autres termes, on a cherché à sécuriser ces algorithmes. Par exemple, l'algorithme dit de doublement et d'addition bien connu est notamment sensible aux attaques à canaux cachés de type simple, car il comporte une opération conditionnelle à la valeur d'un bit de la clé secrète d. Pour sécuriser cet algorithme, on l'a transformé en un l'algorithme dit de doublement avec addition systématique. Dans cet algorithme, quelle que soit la valeur du bit de la clé secrète dans le traitement en cours, on effectue toujours les mêmes opérations, en même nombre. D'une manière générale, on sait sécuriser ces algorithmes vis à vis des attaques simples, en supprimant tous les branchements conditionnels à la valeur de la donnée traitée.

Cependant, on a pu montrer que ces parades ne protégeaient pas des attaques différentielles à canaux cachés, par lesquelles il était possible de découvrir la clé secrète d.

Une parade efficace aux attaques différentielles est de rendre aléatoire les entrées et/ou les sorties de l'algorithme d'exponentiation utilisé pour calculer Q=d.P. En d'autres termes, il s'agit de rendre le multiplieur d et/ou le point P aléatoire.

Des procédé de contre-mesure appliquant ce principe sont connus. De tels procédés de contre-mesure sont notamment décrits dans un article de Jean-Sébastien Coron (Cryptographic Hardware and Embedded Systems, volume 1717 of Lecture Notes in Computer Science, pages 292-302. Springer-Verlag, 1999).

Notamment, dans cet article, un procédé de contre-mesure consiste à masquer le point P en utilisant des coordonnées projectives de ce point, définies de façon aléatoire.

Un point de la courbe elliptique E (différent du point à l'infini) est en effet défini de façon unique sur cette courbe par ses coordonnées affines (x,y). Mais on peut représenter ce point par des coordonnées projectives (X:Y:Z) et il existe un nombre exponentiel de représentations en coordonnées projectives.

Dans le procédé de contre-mesure décrit, on tire ainsi un nombre aléatoire t IK et on représente le point P par des coordonnées projectives fonction de ce nombre aléatoire.

Dans l'article précité, on propose de former de manière avantageuse les coordonnées projectives du point P en fonction du nombre aléatoire t et des coordonnées affines, par exemple sous la forme P=(tx : ty : t), en coordonnées projectives homogènes, ou P=($t^2$x:$t^3$y:t) en coordonnées jacobiennes. On applique l'algorithme d'exponentiation à ces coordonnées. On obtient une représentation du point Q en coordonnées projectives, desquelles on déduit (calcule) les coordonnées affines de ce point.

Un objet de la présente invention est un procédé de contre-mesure, notamment vis à vis des attaques différentielles à canaux cachés.

Un autre objet de l'invention est un procédé de contre-mesure aisé à mettre en oeuvre.

Par rapport à l'article précité, le procédé proposé présente l'avantage d'être plus rapide et d'être applicable indifféremment en coordonnées affines et projectives.

L'idée à la base de l'invention est d'utiliser les isomorphismes de groupe, pour transposer les calculs de multiplication scalaire sur une courbe elliptique E_u obtenue par application d'un isomorphisme de groupe $\varphi_u$, défini par rapport à un nombre aléatoire u, non nul, élément du corps IK.

En d'autres termes, le procédé de contre-mesure consiste alors à tirer un nombre aléatoire u non nul, pour définir une courbe elliptique isomorphe aléatoire E_u=$\varphi_u$(E), à calculer les coordonnées du point image sur cette courbe E_u du point P, à appliquer l'algorithme d'exponentiation à ce point image P' sur la courbe elliptique isomorphe E_u, pour obtenir un point résultant Q' et à calculer les coordonnées du point pré-image Q du point Q' sur la courbe elliptique E sur laquelle est basée le système cryptographique.

Comme la structure algébrique des courbes elliptiques est très riche, il existe de nombreuses possibilités de définitions d'isomorphismes, en sorte que le procédé de contre-mesure selon l'invention est d'application très générale. L'invention concerne donc un procédé de contre-mesure dans un composant électronique mettant en oeuvre un algorithme cryptographique du type à clé publique sur une courbe elliptique déterminée E sur un corps IK, comprenant un calcul d'exponentiation de type Q=d.P où P et Q sont des points de la courbe elliptique déterminée (E), et d un nombre prédéterminé, caractérisé en ce qu'il comprend les étapes suivantes :

- tirage d'un nombre u aléatoire non nul, élément du corps IK, pour définir aléatoirement une courbe elliptique isomorphe E_u,
- calcul des coordonnées d'un point P' sur ladite courbe elliptique isomorphe E_u, image du point P,
- application d'un algorithme d'exponentiation au dit point image P' sur ladite courbe elliptique isomorphe E_u, pour obtenir un point résultant Q',

- calcul des coordonnées sur la courbe elliptique déterminée E du point Q, pré-image du point résultant Q'.

D'autres caractéristiques et avantages de l'invention sont présentés dans la description suivante, faite en référence à un mode de réalisation particulier, pour des courbes elliptiques sur un corps IK de caractéristique différente de 2 ou 3.

On a vu qu'une courbe elliptique sur un tel corps peut se définir comme suit : $E/_{IK}$: $y^2 = x^3 + ax + b$.

Soient deux courbes elliptiques E1 et E2 définies sur un tel corps :

$$E1/_{IK} : y^2 = x^3 + ax + b$$

$$E2/_{IK} : y^2 = x^3 + a'x + b'$$

On montre que ces deux courbes sont isomorphes sur IK, si et seulement si il existe un nombre u non nul appartenant à IK tel que $u^4 a' = a$ et $u^6 b' = b$.

Si on note φ l'isomorphisme de groupe tel que E2=φ(E1), on montre qu'à tout point P=(x,y) de la courbe elliptique E1 correspond un point image φ(P)=P'=(x',y') sur la courbe elliptique E2 tel que :

$$x' = u^{-2}x \text{ et } y' = u^{-3}y.$$

Inversement, par application de l'isomorphisme inverse $\varphi^{-1}$ tel que $\varphi^{-1}$(E2)=E1, à tout point P'=(x',y') de la courbe elliptique E2 correspond un point pré-image $\varphi^{-1}$(P')=P=(x,y) sur la courbe elliptique E1 tel que :

$$x = u^2 x' \text{ et } y = u^3 y'.$$

Dans l'invention, on fait application de l'isomorphisme de groupe appliqué aux courbes elliptiques, pour masquer aléatoirement le point P auquel est appliqué l'algorithme d'exponentiation.

Soit donc un algorithme d'exponentiation de type Q=d.P, où Q et P sont des points d'une courbe elliptique définie E. Le procédé de contre-mesure selon l'invention consiste donc à tirer aléatoirement un nombre u dans les éléments non nuls du corps IK, pour définir aléatoirement une courbe elliptique isomorphe $E\_u = \varphi_u(E)$. On calcule les coordonnées du point image P' du point P sur cette courbe elliptique isomorphe E_u et on applique ce point image P' en entrée de l'algorithme d'exponentiation. On obtient un point Q' résultant sur la courbe elliptique isomorphe E_u. On calcule alors les coordonnées du point pré-image Q du point Q' résultant sur la courbe elliptique définie E. En d'autres termes, selon ce procédé, on calcule :

$$Q = \varphi^{-1}(d(\varphi(P))).$$

Par ce procédé, le nombre u étant aléatoire, les étapes intermédiaires de calcul de l'algorithme d'exponentiation sont imprévisibles.

Ce procédé peut s'appliquer à tout algorithme d'exponentiation de son choix et dans le système de coordonnées, affines ou projectives, de son choix. En particulier, on peut représenter le point P'=(x'1,y'1) par des coordonnées projectives P'=(X :Y :Z), avec la en coordonnée en Z égale à 1, soit : P'=(x'1:y'1:1).

On utilise alors un algorithme d'exponentiation en coordonnées projectives (homogènes ou jacobiennes) de son choix. La coordonnées en Z étant égale à 1, le nombre d'opérations pour calculer d.P' est alors réduit.

De préférence, on tire une valeur aléatoire u à chaque fois que l'algorithme cryptographique est sollicité.

Dans une autre variante de réalisation, on tire une valeur aléatoire u à la personnalisation du composant électronique. Cette valeur est alors mémorisée dans une portion de mémoire ré-inscriptible du composant électronique, comme la clé secrète d. Dans ce cas, on peut prévoir de pré-calculer certaines valeurs, pour accélérer le traitement. Dans l'exemple de réalisation plus particulièrement décrit sur des corps finis de caractéristique différente de 2 ou 3, on pourra notamment pré-calculer la valeur $u^{-1}$, qui permet de calculer les coordonnées des points P' et Q' et on la mémorisera en mémoire re-inscriptible. Ceci est notamment intéressant dans les applications dans lesquelles la vitesse de traitement est très importante, et dans lesquelles la mémoire ré-inscriptible a une capacité suffisante.

On peut détailler le procédé de contre-mesure selon l'invention, appliqué à un système cryptographique basé sur une courbe elliptique E définie sur un corps fini de caractéristique différente de 2 ou 3, pour effectuer une exponentiation du type Q = d. P, où Q et P sont des points de la courbe elliptique E et d un nombre prédéterminé. d et P sont les entrées et Q la sortie de l'algorithme d'exponentiation.

Dans un tel exemple, on a vu que l'équation de Weirstrass pour la courbe elliptique E sur le corps IK s'écrit :

$$E/_{IK} : y^2 = x^3 + ax + b.$$

Dans cette courbe, l'opération d'addition d'un point P=$(x_1,y_1)$ et Q=$(x_2,y_2)$ (avec Q≠-P) donne un point R=$(x_3,y_3)$=P+Q tel que : $x_3=\lambda^2-x_1-x_2$ et $y_3=\lambda(x_1-x_3)-y_1$

$$\text{avec } \lambda = (y_2-y_1)/(x_2-x_1), \text{ si P≠Q} \qquad \text{(formule 1)}$$

$$\text{et } \lambda = (3x_1^2+a)/2y_1, \text{ si P = Q.} \qquad \text{(formule 2)}.$$

La formule 1 est la formule d'addition de deux points distincts : R=Q+P tandis que la formule 2 est la formule de doublement du point : R=2.P.

On remarque qu'aucune de ces formules n'utilise le paramètre b de l'équation de la courbe elliptique E.

Ainsi, un procédé de contre-mesure appliqué à une courbe elliptique définie par l'équation de Weirstrass du type $y^2= x^3 + ax +b$ , et à un algorithme d'exponentiation appliqué à un point P = (x1,y1) utilisant des opérations de doublement d'un point et d'addition entre deux points de cette courbe E, peut s'écrire comme suit :

a). Tirer aléatoirement un nombre u non nul;

b). Evaluer le paramètre a'=$u^{-4}a$ de l'équation de Weirstrass du type $y^2= x^3 + a'x +b'$ définissant une courbe elliptique isomorphe E_u de la courbe elliptique E;

c). Former le point P'=$(u^{-2}x_1,u^{-3}y_1)$;

d). Calculer le point Q'=d.P' sur la courbe elliptique isomorphe E_u.

e). Si le point résultant Q' est le point à l'infini, le point Q est le point à l'infini,

$$\text{Sinon poser Q'=}(x'_3,y'_3);$$

f). retourner Q=$(u^2x'_3,u^3y'_3)$ comme point pré-image.

De façon remarquable, le calcul du point Q+dP'à l'étape d) de ce procédé peut se faire avec l'algorithme de son choix, et dans le système de coordonnées de son choix. En particulier l'utilisation de coordonnées projectives (homogènes ou jacobiennes) pour le point P' 4 est particulièrement intéressante si on représente P' avec sa coordonnée en Z égale 1 puisque le nombre d'opérations pour calculer d P' est alors réduit. On a alors P'=$(u^{-2}xl : u^{-3}yl :1)$

Le procédé de contre-mesure selon l'invention peut être généralisé. Notamment, les courbes elliptiques peuvent être données par des paramétrisations autres que celles de Weierstrass.

De façon générale l'étape b). du procédé détaillé ci-dessus consiste ainsi à calculer des paramètres de l'équation elliptique isomorphe, à partir du nombre aléatoire u et des paramètres de la courbe elliptique sur laquelle est basée le système cryptographique. Seuls les paramètres utilisés dans les opérations sur la courbe elliptique (addition de deux points, doublement) sont à calculer. Dans l'exemple détaillé ci-dessus, seul le paramètre a est à calculer.

En outre, le procédé de contre-mesure peut s'appliquer aux différents algorithmes d'exponentiation de l'état de la technique, puisqu'il ne fait que transposer cet algorithme sur une autre courbe elliptique. Ainsi, ce procédé de contre-mesure peut être utilisé dans tous les systèmes cryptographiques sur courbe elliptique. Il s'applique notamment aux composants électroniques destinés aux cartes à puces.

**Revendications**

1.    Procédé de contre-mesure dans un composant électronique mettant en oeuvre un algorithme cryptographique du type à clé publique sur une courbe elliptique déterminée E sur un corps IK, comprenant un calcul d'exponentiation de type Q=d.P où P et Q sont des points de la courbe elliptique déterminée (E), et d un nombre prédéterminé, **caractérisé en ce que** ledit procédé comprend les étapes suivantes :

- tirage d'un nombre u aléatoire non nul, élément du corps IK, pour définir aléatoirement une courbe elliptique isomorphe E_u,
- calcul des coordonnées d'un point P' sur ladite courbe elliptique isomorphe E_u, image du point P,
- application d'un algorithme d'exponentiation au dit point image P' sur ladite courbe elliptique isomorphe E_u, pour obtenir un point résultant Q',
- calcul des coordonnées sur la courbe elliptique déterminée E du point Q, pré-image du point résultant Q'.

2. Procédé de contre-mesure selon la revendication 1, **caractérisé en ce que** la définition de la courbe elliptique isomorphe E_u comprend le calcul de paramètres (a et/ou b) de ladite courbe en fonction des paramètres de la courbe elliptique définie E et de ladite variable aléatoire, lesdits paramètres étant utilisés dans ledit algorithme d'exponentiation.

3. Procédé de contre-mesure selon la revendication 1 ou 2, **caractérisé en ce que** ledit algorithme d'exponentiation est appliqué au point image P' en coordonnées affines ($P=(x'l,y'l)$).

4. Procédé de contre-mesure selon la revendication 1 ou 2, **caractérisé en ce que** ledit algorithme d'exponentiation est appliqué au point image P'en coordonnées projectives.

5. Procédé de contre-mesure selon la revendication 4, **caractérisé en ce que** lesdites coordonnées projectives sont du type à coordonnée en Z égale à 1 ($P=(x'1:y'1:1)$).

6. Procédé - de contre-mesure selon la revendication 2, la courbe elliptique définie E ayant pour équation $y^2= x^3 + ax +b$, et l'algorithme d'exponentiation appliqué à un point $P = (xl,yl)$ utilisant des opérations de doublement d'un point ou d'addition ou de soustraction entre deux points de cette courbe E, **caractérisé en ce qu'**il comprend les étapes suivantes :

   a). Tirer aléatoirement un nombre u non nul;
   b). Evaluer le paramètre $a'=u^{-4}a$ dans l'équation $y^2= x^3 + a'x +b'$ définissant une courbe elliptique isomorphe E_u à la courbe elliptique E;
   c). Former le point image $P'=(u^{-2}x_1,u^{-3}y_1)$ du point P sur ladite courbe isomorphe E_u;
   d). Calculer le point résultant $Q'=d.P'$ par application dudit algorithme d'exponentiation sur ladite courbe elliptique isomorphe E_u.
   e). Si le point Q' est égal au point à l'infini, retourner comme point image Q, le point à l'infini, Sinon poser

$$Q'=(x'_3,y'_3);$$

   f). retourner $Q=(u^2x'_3,u^3y'_3)$.

7. Procédé de contre-mesure selon la revendication précédente, **caractérisé en ce que** ledit algorithme d'exponentiation est appliqué à l'étape d) à des coordonnées projectives (X:Y:Z) du point P' formées à l'étape c) par $P'= (u^{-2}x_1:u^{-3}y_1:1)$.

8. Composant électronique dans lequel un procédé de contre-mesure selon l'une quelconque des revendications précédentes est mis en oeuvre.

9. Carte à puce comprenant un composant électronique selon la revendication 8.


**Patentansprüche**

1. Gegenmaßnahmen in einem elektronischen Baustein zur Ausführung eines Krypto-Algorithmus mit auf einer auf einem Korpus IK bestimmten elliptischen Kurven E basierendem öffentlichen Schlüssel mit einer Exponentierungsberechnung vom Typ Q = d.P, in der P und Q Punkte der bestimmten elliptischen Kurve (E) sind und d eine vorbestimmte Zahl ist, **dadurch gekennzeichnet, dass** das genannte Verfahren die folgenden Stufen umfasst:

   - Ermitteln einer zufälligen Zahl u ungleich Null, Element des Korpus IK, zur zufälligen Definition einer isomorphen elliptischen Kurve E_u,

- Berechnung der Koordinaten eines Punktes P' auf der genannten isomorphen elliptischen Kurve E_u, Darstellung des Punktes P,
- Anwendung eines Exponentierungs-Algorithmus auf den genannten Darstellungspunkt P' auf der genannten isomorphen elliptischen Kurve E_u zwecks Erhalts eines resultierenden Punktes Q',
- Berechnung der Koordinaten auf der bestimmten elliptischen Kurve E des Punktes Q, der Vor-Darstellung des resultierenden Punktes Q'.

2. Gegenmaßnahmen gemäß Anspruch 1, **dadurch gekennzeichnet, dass** die Definition der isomorphen elliptischen Kurve E_u die Parameterberechnung (a und / oder b) der genannten Kurve in Abhängigkeit der Parameter der definierten elliptischen Kurve E und der genannten zufälligen Variable umfasst, wobei die genannten Parameter in dem genannten Exponentierungs-Algorithmus verwendet werden.

3. Gegenmaßnahmen gemäß Anspruch 1 oder 2, **dadurch gekennzeichnet, dass** der genannte Exponentierungs-Algorithmus auf den Bildpunkt P' in affinen Koordinaten (P = (x'1, y'1)) angewendet wird.

4. Gegenmaßnahmen gemäß Anspruch 1 oder 2, **dadurch gekennzeichnet, dass** der genannte Exponentierungsalgorithmus auf den Bildpunkt P' in projektiven Koordinaten angewendet wird.

5. Gegenmaßnahmen gemäß Anspruch 4, **dadurch gekennzeichnet, dass** die genannten projektiven Koordinaten vom Typ mit Koordinaten in Z gleich 1 (P = (x'1:y'1:1) sind.

6. Gegenmaßnahmen gemäß Anspruch 2, wobei die definierte elliptische Kurve E die Gleichung $y^2 = x^3 + ax + b$ hat und der auf einen Punkt P = (xl, yl) angewendete Exponentierungs-Algorithmus die Verdoppelungsoperationen eines Punktes oder Additions-oder Substraktionsoperationen zwischen zwei Punkten dieser Kurve E verwendet, **dadurch gekennzeichnet, dass** sie die folgenden Stufen umfasst:

a) Zufällig eine Zahl u ungleich Null ermitteln;
b) Den Parameter $a' = u^{-4} a$ in der eine isomorphe elliptische Kurve E_u zur elliptischen Kurve E definierenden Gleichung $y^2 = x^3 + a'x + b'$ bewerten;
c) den Bildpunkt $P' = (u^{-2} x_1, u^{-3} y_1)$ des Punktes P auf der genannten isomorphen Kurve E_u bilden;
d) Berechnung des resultierenden Punktes Q' = d.P' durch Anwendung des genannten Exponentierungs-Algorithmus auf der genannten isomorphen elliptischen Kurve E_u.
e) Wenn der Punkt Q' gleich dem Punkt in der Unendlichkeit ist, den Punkt in der Unendlichkeit als Darstellungspunkt Q umkehren, Ansonsten schreiben

$$Q' = (x'_3, y'_3);$$

f) $Q = (u^2 x'_3, u^3 y'_3)$ umkehren.

7. Gegenmaßnahmen gemäß dem vorherigen Anspruch, **dadurch gekennzeichnet, dass** der genannte Exponentierungsalgorithmus in der Stufe d) auf die in der Stufe c) durch $P' = (u^{-2}x_1:u^{-3}y_1:1)$ gebildeten projektiven Koordinaten (X:Y:Z) des Punktes P' angewendet wird.

8. Elektronischer Baustein, in dem Gegenmaßnahmen gemäß einem der vorherigen Ansprüche umgesetzt werden.

9. Chipkarte mit einem elektronischen Baustein gemäß Anspruch 8.

**Claims**

1. A countermeasure method in an electronic component using a cryptographic algorithm of the public key type on a determined elliptic curve E on a field |K, comprising a exponentiation calculation of the type Q=d.P where P and Q are points on the determined elliptic curve (E), and d a pre-determined number, **characterised in that** the said method comprises the following steps:

- drawing a non-zero random number u, an element of the field |K, in order to randomly define an isomorphic elliptic curve E_u,

- calculation of the coordinates of a point P' on the said isomorphic elliptic curve E-u, the image of the point P,
- application of an exponentiation algorithm to the so-called image point P' on the said isomorphic elliptic curve E_u, in order to obtain a resultant point Q',
- calculation of the coordinates on the determined elliptic curve E of the point Q, the pre-image of the resultant point Q'.

2. A countermeasure method according to Claim 1, **characterised in that** the definition of the isomorphic elliptic curve E_u comprises the calculation of parameters (a and/or b) of the said curve as a function of the parameters of the defined elliptic curve E and of the said random variable, the said parameters being used in the said exponentiation algorithm.

3. A countermeasure method according to Claim 1 or 2, **characterised in that** the said exponentiation algorithm is applied to the image point P' in affine coordinates (P = (x'1, y'1)).

4. A countermeasure method according to Claim 1 or 2, **characterised in that** the said exponentiation algorithm is applied to the image point P' in projective coordinates.

5. A countermeasure method according to Claim 5, **characterised in that** the said projective coordinates are of the type with the z coordinate equal to 1 (P=(x'1:y'1:1).

6. A countermeasure method according to Claim 2, the defined elliptic curve E having as its equation $y^2 = x^3 + ax + b$, and the exponentiation algorithm applied to a point P = (x1, yl) using operations of doubling a point or addition or subtraction between two points on this curve E, **characterised in that** it comprises the following steps:

   a) Randomly drawing a non-zero number u;
   b) Evaluating the parameter $a' = u^{-4}a$ in the Weierstrass equation of the type $y^2 = x^3 + a'x + b'$ defining an isomorphic elliptic curve E_u of the elliptic curve E;
   c) Forming the image point $P' = (u^{-2}x_1, u^{-3}y_1)$ of the point P on the said isomorphic curve E_u,
   d) Calculating the resultant point Q' = d.P' by applying the said exponentiation alogorithm to the said isomorphic elliptic curve E_u.
   e) If the point Q' is equal to the point at infinity, returning the point at infinity as the image point Q, Otherwise posing

   $$Q' = (x'_3, y'_3);$$

   f) returning $Q = (u^2x'_3, u^3y'_3)$ as the pre-image point.

7. A countermeasure method according to the preceding claim, **characterised in that** the said exponentiation algorithm is applied at step d) to projective coordinates (X:Y:Z) of the point P' formed at step c) by $P' = (u^{-2x1}:u^{-3}y_1:1)$.

8. n electronic component in which a countermeasure method according to any one of the preceding claims is implemented.

9. chip card comprising an electronic component according to Claim 8.